Europäisches Patentamt

(19) European Patent Office

Office européen des brevets

(11) Veröffentlichungsnummer : **0 021 334**
**B1**

# (12) EUROPÄISCHE PATENTSCHRIFT

(45) Veröffentlichungstag der Patentschrift :
23.05.84

(21) Anmeldenummer : 80103383.8

(22) Anmeldetag : 18.06.80

(51) Int. Cl.³ : **A 01 G 25/00// E04D13/08**

(54) **Vorrichtung zur Bewässerung von Bäumen und sonstigen gärtnerischen Kulturen in der Nähe von Gebäuden.**

(30) Priorität : 25.06.79 AT 4425/79

(43) Veröffentlichungstag der Anmeldung :
07.01.81 Patentblatt 81/01

(45) Bekanntmachung des Hinweises auf die Patenterteilung : 23.05.84 Patentblatt 84/21

(84) Benannte Vertragsstaaten :
**BE CH DE FR GB IT LI LU NL SE**

(56) Entgegenhaltungen :
**US-A- 4 161 186**

(73) Patentinhaber : **Weingärtner, Sepp, Dipl.-Ing. Dr.**
**Arlbogasse 2/9**
**A-1220 Wien (AT)**

(72) Erfinder : **Weingärtner, Sepp, Dipl.-Ing. Dr.**
**Arlbogasse 2/9**
**A-1220 Wien (AT)**

(74) Vertreter : **Kliment, Peter, Dipl.-Ing. Mag.-jur.**
**Singerstrasse 8**
**A-1010 Wien (AT)**

**Beschreibung**

Die Erfindung betrifft eine Vorrichtung zur Bewässerung von Bäumen oder gärtnerischen Kulturen im verbauten Gebiet, wobei der Baum, die Bäume bzw. die gärtnerischen Kulturen von einem in der Nähe befindlichen Haus mit Regenwasser versorgt wird bzw. werden und die Zuleitung des Wassers vom Regenabfallrohr zum Wurzelbereich des Baumes, der Bäume bzw. der gärtnerischen Kulturen durch ein unterirdisches Verbindungsrohr erfolgt.

Die Bäume des verbauten Stadtgebietes sind einer außerordentlich starken Umweltbelastung ausgesetzt. Soweit Oberflächenwasser von der Straße den Baumscheiben zugänglich ist, bewirkt die Anreicherung von winterlichem Streusalz den Eintrag von Natrium- (bzw. Calzium-) Ionen und Chloridionen in den Wurzelraum der Bäume und gärtnerischen Kulturen. Dabei blockieren die Natriumionen einerseits durch Osmosestörungen die Fähigkeit der Wurzel zur Aufnahme von Bodenwasser, zum anderen kann im Laufe der Zeit der Hydratationsprozesse im Schwarmwasser von Tonkolloiden eine chemische Verfestigung und Verdichtung des Bodens bis zur völligen Wasserundurchlässigkeit eintreten. Soferne zur Zeit der Einwirkung von Streusalz überhaupt ein restliches Vermögen zur Aufnahme von Nährlösung erhalten bleibt, geraten Chloridionen in die Zellsubstanz der Bäume und führen dort zu schweren Stoffwechselstörungen.

Der oft gewählte Ausweg, die Baumscheiben der Bäume durch einen Sockel vom Oberflächenwasser der Straße abzuschirmen, hält zwar den größeren Teil der schädlichen Salzionen ab, führt aber, bedingt durch die viel zu kleinen Erdbeete, die bei etwa einem Fünfzigstel der erforderlichen Einzugsgebietsfläche für die dargebotenen Regenspenden liegen, zum Vertrocknen der Bäume während der sommerlichen Trockenzeiten.

Es ist bereits etwa in der US-A-4 161 186 vorgeschlagen worden, zur Bewässerung der Bäume die Regenwasserspende von Dächern heranzuziehen, wobei die Zuleitung des Wassers vom Regenabfallrohr zum Wurzelbereich durch eine unterirdische Verbindungsleitung erfolgt. Bei dieser bekannten Ausführungsform kommt es jedoch bei heftigen Regenfällen zu einem Rückstau des Wassers bis zur Regentraufe, wo das Wasser überläuft und verbaute Flächen, wie Gehsteige, Parkstreifen und Fahrbahnen überflutet.

Weiters ist es bekannt, Bewässerungsflüssigkeit über Rohrleitungen zum Wurzelbereich des Baumes, der Bäume bzw. der gärtnerischen Kulturen zu leiten. So sind eine ganze Reihe von Unterflur-Bewässerungssystemen bekannt, die den Vorteil haben, daß der Wasserverbrauch geringer ist, als bei der herkömmlichen **Bewässerung oberhalb der Bodenoberfläche und** weiterhin, daß das Bewässerungssystem keinen störenden Eingriff in die Landschaft darstellt.

Aufgabe der vorliegenden Erfindung ist es, die klaglose Zufuhr von Niederschlagwasser und Leitungswasser zu den Bäumen und Kulturen und selbsttätig und ohne manuelle Manipulation die klaglose Abfuhr des eventuell anfallenden Überschußwassers zu erreichen. Dies wird bei einer Vorrichtung der eingangs angeführten Art erfindungsgemäß dadurch erreicht, daß im unterirdischen Verbindungsrohr oder in der Zuleitung zum Verbindungsrohr eine Wasserdurchfluß-Regeleinrichtung vorgesehen ist, welche bei rückstauendem, vom Wurzelbereich nicht aufgenommenen Überschußwasser die Wasserzufuhr zum bzw. die Weiterleitung im unterirdischen Verbindungsrohr unterbindet, und daß das weiter zufließende Überschußwasser entweder über eine Absweigung zwischen Regenabfallrohr und unterirdischem Verbindungsrohr und sodann über ein unterirdisches Abfallrohr in einen Sammel- oder Hauskanal oder über Dachbodenrinnen und ein Fäkalabfallrohr, das in einen Haus- oder Sammelkanal mündet, ableitbar ist.

Durch diese Maßnahme wird die klaglose Abfuhr des eventuell anfallenden vom Wurzelbereich des Baumes bzw. der Kulturen nicht aufgenommenen Überschußwassers selbsttätig und ohne manuelle Manipulation und ohne Überflutung von verbauten Flächen erreicht.

In weiterer Ausgestaltung der Erfindung ist vorgesehen, daß bei Abfuhr des zufließenden Überschußwassers über Dachbodenrinnen und ein Fäkalabfallrohr die Regeleinrichtung zwischen Regenabfallrohr und unterirdischem Verbindungsrohr angeordnet ist und ein vom rückstauenden Überschußwasser betätigbares Schwimmerventil aufweist, wobei das ankommende Wasser bei geschlossenem Schwimmerventil in einem druckdichten Regenabfallrohr bis zur Regentraufe hochgestaut wird.

Die Erfindung wird an Hand der in den Zeichnungen dargestellten Ausführungsbeispiele näher erläutert. Es zeigen :

Figur 1 die schematische Lage der Leitungselemente, der Abzweigung und der Versickerungseinrichtung eines ersten Ausführungsbeispiels,

Figur 2 die Abzweigung nach Figur 1,

Figur 3 einen Schnitt durch Figur 2 nach der Achse A-A,

Figur 4 einen Schnitt durch Fig. 3 nach der Achse B-B,

Figur 5 ein zweites Ausführungsbeispiel,

Figur 6 das Detail der Regeleinrichtung mit Schwimmersteuerung nach dem zweiten Ausführungsbeispiel,

Figur 7 einen Schnitt durch Fig. 6 nach der Achse B-B,

Figur 8 einen Schnitt Fig. 7 nach der Achse A-A,

Figur 9 eine weitere Variante des unterirdischen Verbindungsrohres,

Figur 10 das Ventil mit Schwimmer im Detail, nach Fig. 9.

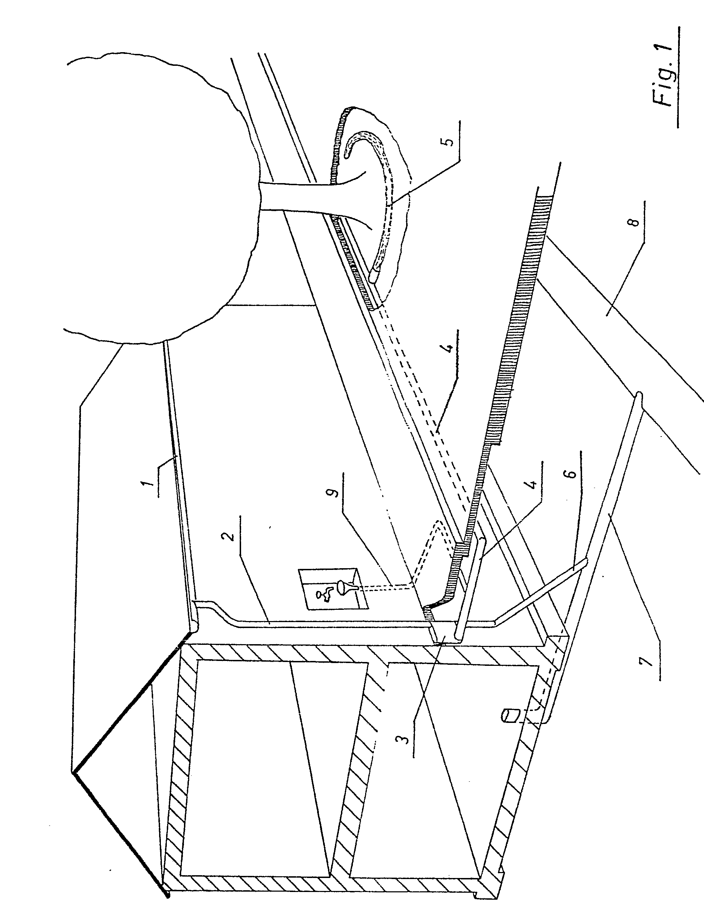

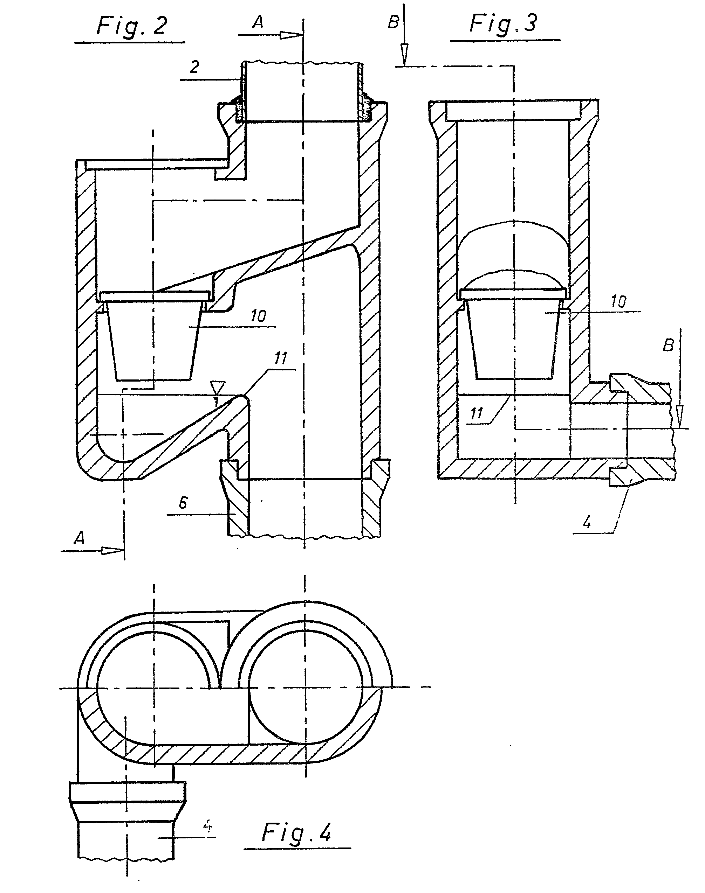

Beim Beispiel nach Fig. 1 gelangt das Regenwasser vom Einzugsgebiet der Dachfläche aus über die Regentraufe 1 und das Regenalfallrohr 2 zu der in Fig. 2 näher beschriebenen als Wasserdurchfluß-Regeleinrichtung dienenden Abzweigung 3 und von hier zunächst in das unterirdische Verbindungsrohr 4.

Über die Versickerungseinrichtung 5 wird das Wasser in den Boden abgegeben. Diese Versickerungseinrichtung besteht aus je einem oder mehreren gelochten oder porösen, starren oder flexiblen Behältern.

Das Erdbeet des Baumes wird durch eine sockelartige Einfassung 13 vom Zutritt des im Winter salzhaltigen Oberflächenwassers der benachbarten befestigten Flächen wie Fahrbahn oder Gehsteig geschützt.

Ist die Wasseraufnahmefähigkeit des Bodens erschöpft, so staut das Wasser bis zur Abzweigung 3 zurück und das nachkommende, überschüssige Regenwasser gelangt vom Regenabfallrohr 2 in das unterirdische Abfallrohr 6 und im weiteren in den Hauskanal 7 und bei Anschluß an einen Straßenkanal 8 in diesen.

Zusätzlich kann bei der beschriebenen Vorrichtung in Trockenzeiten das fehlende Niederschlagswasser durch Leitungswasser ergänzt werden, das in das Abfallrohr oder in das unterirdische Verbindungsrohr eingespeist wird (9).

Die Fig. 2, 3 und 4 zeigen Funktion und einen möglichen Bautypus der Abzweigung. Das ankommende Wasser gelangt vom Regenabfallrohr 2 über einen als Sieb ausgebildeten Eimer 10 in das unterirdische Verbindungsrohr 4. Bei fortschreitendem Rückstau in diesem kommt es schließlich zum Ausspiegeln an der Überlaufkante 11 und im weiteren zum Ablaufen des vom Abfallrohr 2 ankommenden Überschußwassers in das unterirdische Abfallrohr 6.

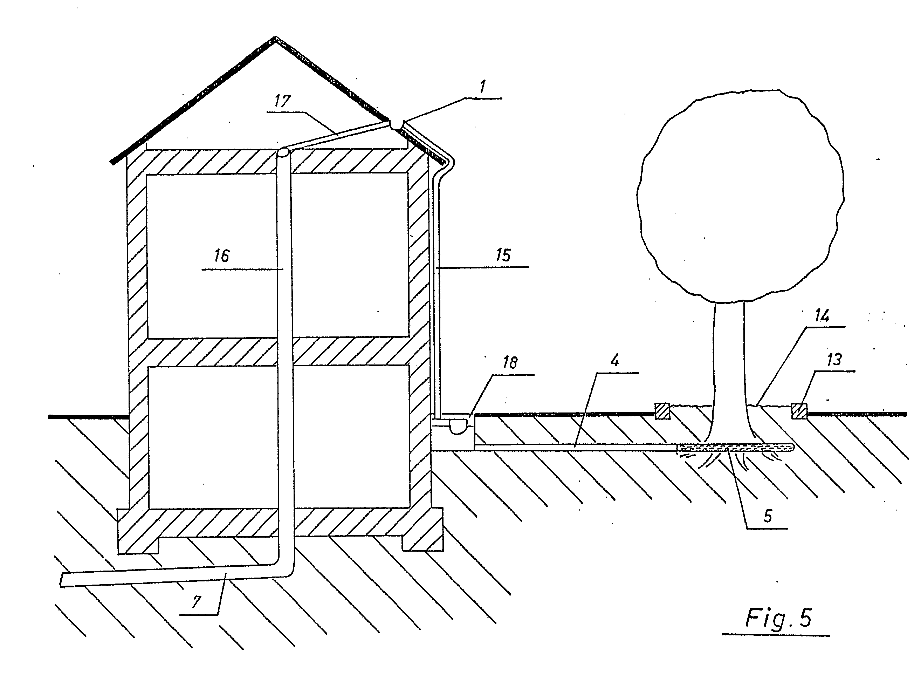

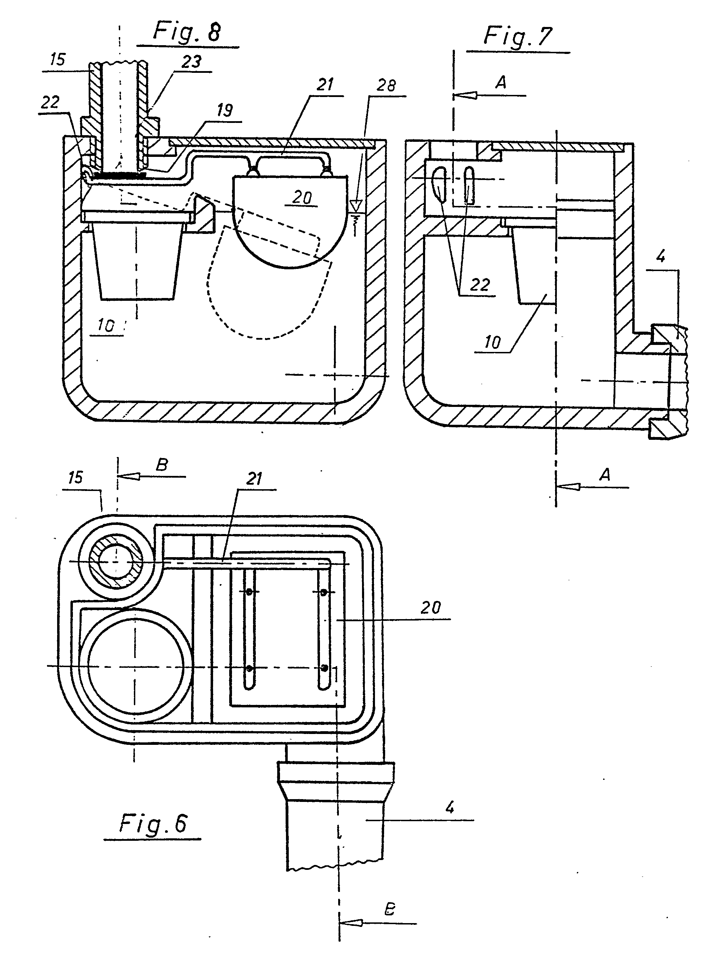

Fig. 5 zeigt ein Ausführungsbeispiel, das in jenem Fall angebracht ist, wo die Entwässerung des Regenwassers über im Dachbodenraum liegende Dachbodenrinnen 17 und ein Fäkalabfallrohr 16 und den Hauskanal 7 erfolgt. In diesem Falle wird das Wasser in der Regentraufe vor der Einmündung in die Dachbodenrinne in ein druckfestes Regenabfallrohr 15 geleitet. Das Regenwasser gelangt sodann zur Regeleinrichtung mit Schwimmersteuerung 18 und von hier in das unterirdische Verbindungsrohr 4 und die Versickerungseinrichtung 5. Tritt mehr Wasser in das unterirdische Verbindungsrohr 4 als der Boden von der Versickerungseinrichtung 5 aufnehmen kann, so staut das Wasser bis in die Kammer der Regeleinrichtung 18 zurück. Die Fig. 6, 7 und 8 zeigen ein Ausführungsbeispiel einer solchen Regeleinrichtung mit Schwimmersteuerung. Das in die Gehäusekammer rückstauende Wasser hebt den Schwimmer 20. Der Schwimmer ist am Schwimmerhebel 21 drehbar im Lager 22 gelagert. Durch die Aufwärtsdrehung des Schwimmerhebels 21 wird die daran montierte Dichtungsscheibe 23 gegen den Dichtungskonus 19 gedrückt. Steigt der Wasserspiegel auf Regelniveau 28 an, so erfolgt die Abdichtung des druckfesten Regenabfallrohres 15. In diesem staut das ankommende Regenwasser nun bis zur Regentraufe 1 hoch und entwässert im folgenden über die vorgesehene Dachbodenrinne 17 und das Fäkalabfallrohr 16 und den Hauskanal 7.

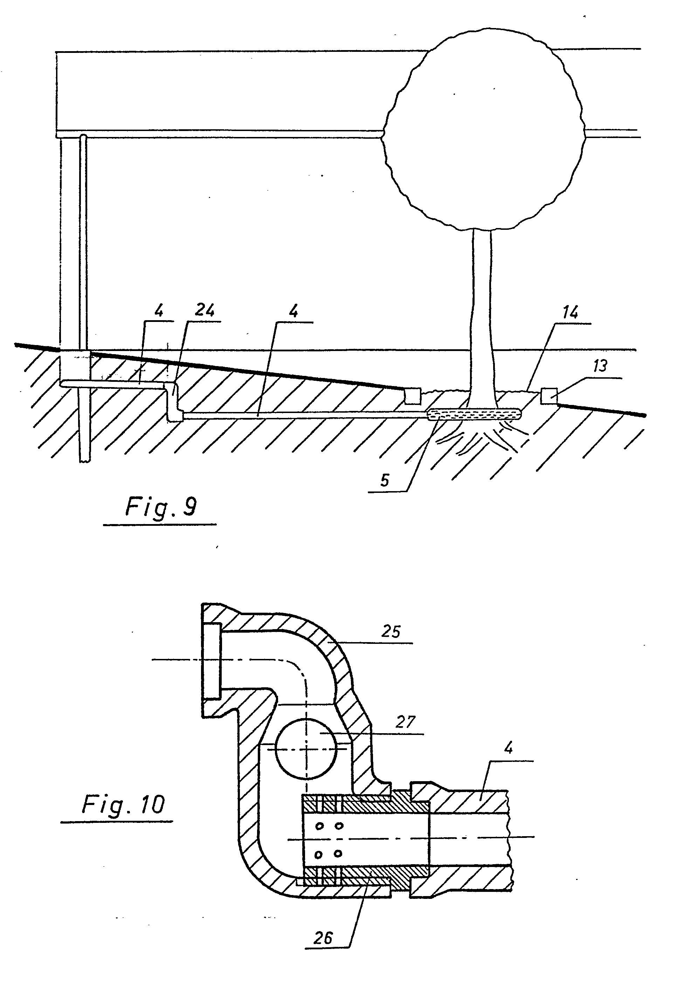

Fig. 9 zeigt eine Variante für beide Ausführungsbeispiele, die in jedem Fall angewendet wird, wo die Überlaufkante 11 (Fig. 2) bzw. das Regelniveau 28 (Fig. 8) höher liegen als die Oberfläche 14 eines zu bewässernden Erdbeetes. In einem derartigen Fall würde es zu einem quellartigen Wasseraustritt an den Bodenoberfläche kommen. In das unterirdische Verbindungsrohr 4 wird nun ein Ventil 24 mit einem Schwimmkörper in einer derartigen Höhenlage eingebaut, daß der Schwimmer bei rückstauendem Wasser auf einem Niveau schließt, das tiefer als die Oberfläche des Erdbeetes 14 liegt.

Fig. 10 zeigt ein Ausführungsbeispiel eines solchen Schwimmerventils. Das von der Abzeigung oder der Regeleinrichtung kommende unterirdische Verbindungsrohr wird an den Flansch 25 angeschlossen. Der Schwimmer 27 schließt bei rückstauendem Wasser das Ventil. Der Rohrstutzen 26 verhindert ein Abschwimmen der Schwimmerkugel. Daran schließt der weitere Teil des unterirdischen Verbindungsrohres an, der zum Erdbeet führt.

## Ansprüche

1. Vorrichtung zur Bewässerung von Bäumen oder gärtnerischen Kulturen im verbauten Gebiet, wobei der Baum, die Bäume bzw. die gärtnerischen Kulturen von einem in der Nähe befindlichen Haus mit Regenwasser versorgt wird bzw. werden und die Zuleitung des Wasssers vom Regenabfallrohr zum Wurzelbereich des Baumes, der Bäume bzw. der gärtnerischen Kulturen durch ein unterirdisches Verbindungsrohr (4) erfolgt, dadurch gekennzeichnet, daß im unterirdischen Verbindungsrohr (4) oder in der Zuleitung zum Verbindungsrohr (4) eine Wasserdurchfluß-Regeleinrichtung (3, 18, 24), vorgesehen ist, welche bei rückstauendem, vom Wurzelbereich nicht aufgenommenen Überschußwasser die Wasserzufuhr zum bzw. die Weiterleitung im unterirdischen Verbindungsrohr (4) unterbindet und daß das weiter zufließende Überschußwasser entweder über eine Abzweigung (3) zwischen Regenabfallrohr (2) und unterirdischem Verbindungsrohr (4) und sodann über ein unterirdische (5) Abfallrohr (6) in einen Sammel- oder Hauskanal (7) oder über Dachbodenrinnen (17) und ein Fäkalabfallrohr (16), das in einen Haus- oder Sammelkanal (7) mündet, ableitbar ist.

2. Vorrichtung nach Anspruch 1. dadurch gekennzeichnet, daß bei Abfuhr des zufließenden Überschußwassers über Dachbodenrinnen (17) und ein Fäkalabfallrohr (16) die Regeleinrichtung (18) zwischen Regenabfallrohr (15) und unterirdischem Verbindungsrohr (4) angeordnet ist und ein vom rückstauenden Überschußwasser betätigbares Schwimmerventil (20) aufweist. wobei das ankommende Wasser bei geschlossenen Schwimmerventil (20) in einem druckdichten Regenabfallrohr (15) bis zur Regentraufe (1) hochgestaut wird.

3. Vorrichtung nach Anspruch 1 oder 2, dadurch gekennzeichnet, daß das unterirdische Verbindungsrohr (4) mehrteilig ausgeführt wird, wobei die einzelnen Teile durch senkrechte Zwischenstücke verbunden sind, welche als Ventile (24) mit Schwimmkörpern (27) ausgebildet sind.

4. Vorrichtung nach Anspruch 1 oder 2, dadurch gekennzeichnet, daß Leitungswasser in das Regenabfallrohr (2, 15) oder direkt in das unterirdische Verbindungsrohr (4) eingespeist wird.

## Claims

1. Apparatus for watering trees or horticultural growths in a built-up area, wherein the tree, trees or horticultural growths is or are supplied with rainwater from a house in the vicinity and the water is fed from the rain drain pipe to the root region of the tree, trees or horticultural growths through an underground connecting pipe (4), characterised in that provided in the underground connecting pipe (4) or in the feed conduit to the connecting pipe (4) is a water flow control means (3, 18, 24) which, in the event of a back-up of excess water which is not absorbed by the root region, cuts off the feed of water to or the flow of water in the underground connecting pipe (4) and that the excess water which continues to be supplied can be carried away either by way of a branch conduit (3) between the rain drain pipe (2) and the underground connecting pipe (4) and then by way of an underground drain pipe (6) into a collecting or domestic drain (7) or by way of loft ducts (17) and a sewage drain pipe (16) which leads into a collecting or domestic drain (7).

2. Apparatus according to claim 1, characterised in that, when the excess water being supplied is carried away by way of loft ducts (17) and a sewage drain pipe (16), the control means (18) is disposed between the rain drain pipe (15) and the underground connecting pipe (4) and has a float valve (20) which can be actuated by the back-up of excess water, wherein when the float valve (20) is closed, the arriving water is caused to back up in a pressure-tight rain drain pipe (15) to the rain gutter (1).

3. Apparatus according to claim 1 or claim 2, characterised in that the underground connecting pipe (4) is of a multi-part construction, wherein the individual parts are joined by perpendicular intermediate members which are formed as valves (24) with float members (27).

4. Apparatus according to claim 1 or claim 2, characterised in that tap water is fed into the rain drain pipe (2, 15) or directly into the underground connecting pipe (4).

## Revendications

1. Dispositif pour irriguer des arbres ou des cultures de jardins en zone bâtie, dans lequel lesdits arbres ou cultures sont alimentés en eau de pluie par un bâtiment se trouvant à proximité, et l'amenée d'eau à partir d'un tuyau d'évacuation d'eau de pluie jusqu'à la zone des racines desdits arbres ou cultures s'effectue par un tuyau de liaison souterrain (4) caractérisé en ce qu'un appareil de régulation de la circulation de l'eau (3, 18, 24) est prévu dans le tuyau de liaison souterrain (4) ou dans la conduite d'amenée à ce tuyau, ledit appareil empêchant l'arrivée d'eau ou stoppant la transmission d'eau au tuyau de liaison souterrain (4) lorsque de l'eau en excédent non absorbée par la zone des racines est refoulée, et en ce que l'eau en excédent continuant à affluer est dérivée dans un égout domestique ou collecteur (7), soit par l'intermédiaire d'un embranchement (3) disposé entre ledit tuyau d'évacuation d'eau de pluie (2) et le tuyau de liaison souterrain (4) puis par un tuyau d'évacuation souterrain (6) qui débouche dans ledit égout, soit par l'intermédiaire de gouttières de combles (17) et d'un tuyau d'évacuation des matières fécales (16).

2. Dispositif selon la revendication 1, caractérisé en ce que, lorsque l'évacuation de l'eau en excédent qui afflue, s'effectue par les gouttières de combles (17) et le tuyau d'évacuation de matières fécales (16), l'appareil de régulation (18) est disposé entre le tuyau d'évacuation d'eau de pluie (15) et le tuyau de liaison souterrain (4), et il présente une vanne à flotteur (20) actionnable par l'eau excédentaire refoulée, l'eau arrivant dans le tuyau d'évacuation d'eau de pluie (15), lorsque la vanne à flotteur (20) est fermée, étant refoulée vers le haut jusqu'à la gouttière d'eau de pluie (1).

3. Dispositif selon la revendication 1 ou la revendication 2, caractérisé en ce que ledit tuyau de liaison souterrain (4) est conçu en plusieurs parties, lesdites parties étant reliées par une pièce intermédiaire perpendiculaire, laquelle est conçue sous la forme d'une vanne (24) à flotteur (27).

4. Dispositif selon la revendication 1 ou la revendication 2, caractérisé en ce que l'eau de distribution est envoyée dans ledit tuyau d'évacuation d'eau de pluie (2, 15), ou directement dans ledit tuyau de liaison souterrain (4).

Fig. 1

Fig. 2

2

A

B

Fig. 3

10

11

10

11

6

B

A

4

4

Fig. 4

Fig. 5

Fig. 8

Fig. 7

Fig. 6

Fig. 9

Fig. 10

5